Europäisches Patentamt

**European Patent Office**

**Office européen des brevets**

(11) Publication number: **0 190 493**
**A2**

# EUROPEAN PATENT APPLICATION

(21) Application number: **85308667.6**

(22) Date of filing: **28.11.85**

(51) Int. Cl.⁴: **H 02 M 3/335**

(30) Priority: **13.12.84 CA 470092**

(43) Date of publication of application:
**13.08.86 Bulletin 86/33**

(84) Designated Contracting States:
**AT BE CH DE FR GB IT LI LU NL SE**

(71) Applicant: **MODERN POWER CONVERSION INC.**
**7100 Warden Avenue Unit 3**
**Markham Ontario L3R 2L6(CA)**

(72) Inventor: **Lees, Brian**
**1, Thimble Berry Way**
**Willowdale Ontario, M2H 3K6(CA)**

(74) Representative: **Votier, Sidney David et al,**
**CARPMAELS & RANSFORD 43, Bloomsbury Square**
**London WC1A 2RA(GB)**

(54) Disabled diac start-up technique for a power supply.

(57) An AC to DC or DC to DC switched mode power supply is provided with a switching means, a control circuit for the switching means and a start-up circuit including voltage actuated means. The switching means, start-up circuit and voltage actuated means are so connected that the switching means is switched on when the input voltage applied to the voltage-actuated means exceeds a certain threshold on start-up and the voltage-actuated means is disabled during normal operation by limiting the voltage applied to the voltage-actuated means to below the threshold.

FIG.1.

EP 0 190 493 A2

"DISABLED DIAC START-UP TECHNIQUE"

This invention relates to AC to DC or DC to DC switched mode power supplies, hereinafter referred to as SMPS, and more particularly to start-up circuits for such power supplies.

An SMPS has control circuitry which may, for example, comprise error amplifiers, comparators, drive stages and over voltage trips as well as other components, and such control circuitry usually requires at least one low voltage DC rail. It is necessary that SMPS control circuitry and its associated low voltage DC behaves in a predictable trouble free manner in all modes of operation. Besides the normal operation mode, there are of course other modes, for example start-up when input voltage is initially applied, brown out when the input voltage sags below a specified value and then recovers, overload or short circuit when a system fault pulls excessive current from one or more of the SMPS outputs, and over voltage protection trip when a too high SMPS output disables the control circuitry.

Also, any generalized circuit which provides power to SMPS control circuitry must contend with many different types of SMPS in addition to differences in the nature and magnitude of the inputs and the outputs. For example, the input voltage may be DC or AC, e.g. from 50 HZ to above 400 HZ. An AC input may be of the North American kind, e.g. 90V AC min., 130V AC max., or of the European kind, for example, 180V AC min., 260V AC max. This is, of course, frequently a strappable option.

Further, since an SMPS is normally required to provide isolation between the input and the outputs, the control circuitry rail or rails may be on the input side, the output side or both, depending on the type of control used.

Known SMPS start-up circuits suffer from various disadvantages and usually can only be used with a limited number of different types of SMPS and their different control circuits.

It is therefore an object of the present invention to provide a start-up circuit for an SMPS which copes adequately with different modes of operation and also can be used with a variety of different types of SMPS.

According to the present invention, an AC to DC or DC to DC switch mode power supply system has an input, a power transformer with a primary connected to the input and with at least one output, switching means connected in series with the primary. and the input, a control circuit operable to control switching of the switching means after start-up, and a start-up circuit comprising voltage-actuated means which conducts only when voltage applied thereto exceeds a predetermined value less than maximum input voltage, said voltage-actuated means being connected to receive start-up input voltage and being connected to the switching means to cause the switching means to switch on when the voltage-actuated means is caused to conduct by increase of input voltage on start-up and means for disabling the voltage-actuated means during normal operation of the power supply by preventing the voltage applied to the voltage-actuated means from reaching the predetermined value.

A start-up circuit in accordance with the invention not only substantially overcomes the disadvantages of known start-up circuits, but is also simple and inexpensive.

The start-up circuit may also comprise resistor-capacitor means connected to the voltage-actuated means to cause start-up voltage applied to the voltage-actuated means to increase at a rate slower than the rate of start-up voltage increase at the input.

The disabling means may comprise capacitor means connected to the voltage-actuated means, and resistor means connected between the capacitor means and the power-transformer primary side of the switching means to maintain said capacitor means sufficiently discharged during normal operation of the power supply to prevent the voltage applied to the voltage-actuated means from exceeding the predetermined value.

The voltage-actuated means may, for example, comprise a triac, a four-layer diode or a uni-junction transistor.

The switching means may comprise at least one transistor, and the power supply, may, for example, comprise a fly-back bi-polar arrangement or a half or full bridge power FET arrangement.

The advantages of the invention will be readily apparent from the following description of the preferred embodiments made with reference to the accompanying diagrammatic drawings, of which:

Figure 1 is a simplified schematic circuit diagram of a fly back bi-polar switched mode AC to DC power supply having a start-up circuit incorporating a diac in accordance with one embodiment;

Figure 2 is a similar circuit diagram of a half-bridge power FET switched mode AC to DC power supply having a start-up circuit incorporating a diac in accordance with another embodiment;

Figure 3 is a similar circuit diagram of a conventional regulator-converter arrangement; and

Figure 4 is a similar circuit diagram showing the circuit of Figure 3 arranged to incorporate a start-up circuit in accordance with the invention.

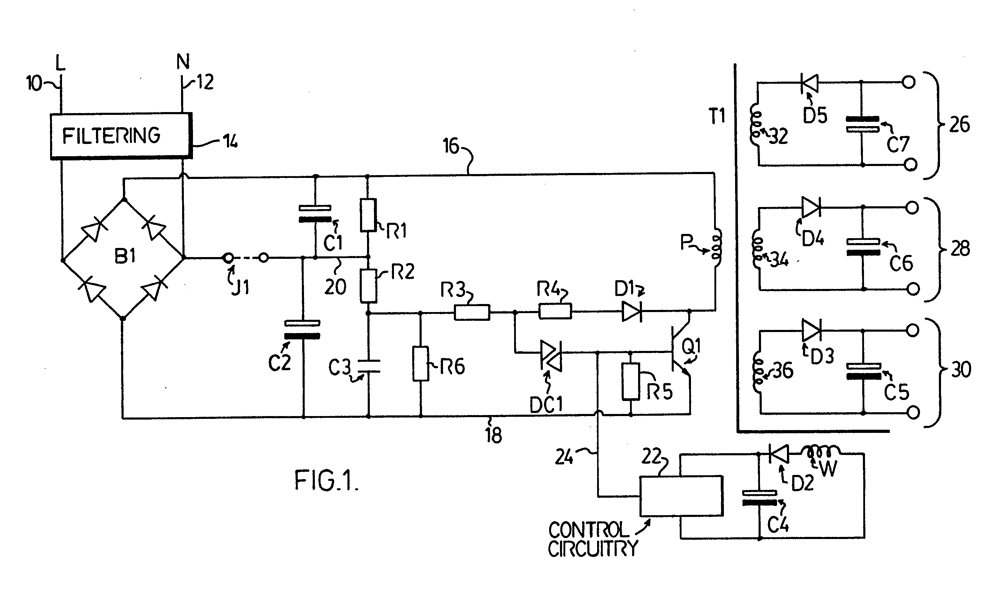

Referring first to Figure 1, a fly-back bi-polar SMPS has AC power supply live and neutral lines 10,12, connected to a filtering circuit 14 to a bridge rectifier B1 which has a positive voltage output line 16 and a negative voltage output line 18.   Reservoir capacitors C1,C2 are connected between positive and negative lines 16,18, as also are resistors R1,R2 and capacitor C3.   The junction of reservoir capacitor C1,C2 is connected by line 20 by the junction of resistors R1,R2. Line 20 is also connected to neutral line 12 by a jumper J1 which is used if the AC voltage is 110V, i.e. North American, the jumper being omitted if the AC voltage is 220V, i.e. European.

The primary P of a power transformer T1 is connected between positive voltage line 16 and the collector of bi-polar transistor Q1 which functions as a fly back switch.   The junction between resistor R2 and ramp capacitor C3 is connected through resistors R3,R4 and rectifier diode D1 to the collector of transistor Q1.   A diac DC1 is connected between the junction of resistors R3,R4 and the gate of transistor Q1.   R3 is a low value resistor.   A resistor R5 is connected between the gate of transistor Q1 and negative voltage line 18 and a resistor R6 is connected across capacitor C3.   A forward start-up winding W on the transformer T1 has opposite ends connected to control circuitry 22, a rectifying diode D2 being included in one connection with a smoothing capacitor C4 for being connected across control circuitry 22.   The output signal of the control circuitry is supplied by control line 24 to the gate of transistor Q1.

The transformer T1 provides three DC outputs 26,28,30, each comprising a fly back secondary winding 32,34,36 respectively, and diode/reservoir capacitor combinations D3/C5, D4/C6 and D5/C7 respectively.

On start-up when AC power is applied to bridge rectifier B1, reservoir capacitors C1,C2 are charged rapidly. It will be understood that in practice a surge limiter may also be provided. Ramp capacitor C3 charges more slowly as determined by resistor R2. Until ramp capacitor C3 reaches the firing voltage of diac DC1 (approximately 32V) only leakage current flows through diac DC1 and switching transistor Q1 and diode D1 remain cut off. Hence, during this time no power is supplied to the DC outputs 26,28,30 or to the control circuitry 22.

When diac DC1 fires, i.e. when ramp capacitor C3 reaches the diac firing voltage of 32V, a large current limited only by low value resistor R3 is drawn from ramp capacitor C3. The impedance looking into the output of the drive circuitry which is part of the control circuitry, is greater than that of the base-emitter diode of transistor Q1 and nearly all the diac current will flow into the base turning transistor Q1 hard on and causing current to flow through primary P of transformer T1. Forward winding W then pumps current into capacitor C2 via rectifier diode D2. Current gain of transistor Q1 and a favourable turns ratio of winding W to primary P results in a high charging current to capacitor C4. No power is pushed through to the outputs 26,28,30 because of the phasing of the fly back secondaries 32,34,36 relative to the start-up winding W and the primary P. Thus, firing of diac DC1 has provided voltage to the control circuitry 22, such voltage being maintained by the holdup action of smoothing capacitor C4. The control circuitry 22 is thus enabled and the SMPS powers up.

The output of the control circuitry through control line 24 takes over from diac DC1 to switch transistor Q1 on and off and the control circuitry 22 continues to be powered by winding W. In addition, diac DC1 becomes disabled due to the negative peak rectifying action of diode D1 and capacitor C3. Resistor R4 is sufficiently large not to rob too much diac current when transistor Q1 is initially switched on by the action of diac DC1 but is sufficiently small (along with resistor R3) to ensure that the negative peak rectified voltage of the switching waveform on the collector of transistor Q1 appears across capacitor C3. Since the least positive voltage on the collector of transistor Q1 is the saturation voltage which occurs during the on time of transistor Q1, the voltage across capacitor C3 and diac DC1 remains low. Diac DC1 is thus disabled, and the start-up circuit plays no further part during normal operation of the SMPS.

In other words, the switching voltage wave form during normal operation spends some time near 0 volts, i.e. the collector of transistor Q1 spends some time near 0 volts, and this is all that is needed to keep diac DC1 disabled since diode D1 keeps ramp capacitor C3 sufficiently discharged via low value resistors R3,R4.

If a DC output 26,28 or 30 is overloaded, the peak rectifying action of diode D2 and capacitor C4 ensures that the voltage to the control circuitry 22 remains virtually unchanged, even if overload protection circuitry in the DC output circuit causes the switching frequency of the SMPS to fall substantially, it causes skipping or reduces the duty cycle.

Normally, the voltage on diac DC1 remains low during output overload and diac DC1 does not fire, provided that transistor Q1 switches fully on after a reasonable period of time, since this is all the negative peak rectifying circuit comprising diode D1 and capacitor C3 needs to keep diac DC1 disabled. However, if a DC output 26,28 or 30 becomes fully short circuited, the duty cycle will become extremely narrow and the voltage across diac DC1 will rise, since the on time of transistor Q1 becomes extremely short and comparable with the time constant of capacitor C3 and resistors R3,R4. Thus, resistor R3 is then able to charge capacitor C3 up to the diac firing voltage. In fact, transistor Q1 may not ever turn fully on at all during short circuit conditions, again allowing diac DC1 to fire.

Under such conditions, diac DC1 is likely to fire repeatedly. However, this does not present a problem since the diac on time in this situation can be arranged to be comparable with the on time during start-up, thus preventing the possibility of transformer saturation. Very little current is delivered to the shorted output by diac DC1, owing to the very low duty cycle of the diac conduction time, since resistor R2 is very large in value compared to resistors R3 and R4. Also, the overload protection circuitry may recognize the extra current and reduce the duty cycle still further.

It is of course an advantage that diac DC1 fires under these conditions, since this helps to maintain the voltage applied to the control circuitry 22. It should also be noted that if there is a short on a DC output 26,28 or 30 when power is applied to the bridge B1, an adequate voltage will still appear across the control circuitry 22 for correct control of the SMPS. If the short is subsequently removed, the outputs would recover without having to recycle the input.

If the AC input voltage on supply lines 10,12 falls below a specified level, either because power is removed or because of an input sag, i.e. brown out conditions, the voltage across reservoir capacitors C1,C2 will fall with consequent reduction in voltage applied to control circuitry 22. In due course, transistor Q1 will not be fully saturated during its on time because of insufficient drive.

This results in the voltage applied to the control circuitry 22 falling still further, in turn further reducing the drive to transistor Q1. Hence, a positive feed-back effect will result, with rapid removal of drive current flowing from control circuitry 22 to transistor Q1. Thus, the SMPS will snap off, thereby preventing any damage which might otherwise be caused by spurious a drive wave form.

In order for the power supply to snap on again, the AC input voltage on supply lines 10,12 must increase to a level high enough for diac DC1 to provide sufficient rail voltage to the control circuitry. This voltage will be higher than the snap-off voltage period. Thus, the start-up circuit posesses inherent hystereis as well as snap action, ensuring safety during brown out conditions.

At times, the power supply outputs 26,28,30 will be supplying 0 or almost 0 current. This occurs during over voltage trip, when some fault in the SMPS results in a high enough voltage on one of the outputs to fore the over-voltage protection circuit. A substantially 0 output also occurs when the SMPS is put on stand-by, i.e. when the output voltages are intentionally disabled without removing the AC input voltage.

Under such conditions, diac DC1 fires pulses of current into the base of transistor Q1 at a very low duty cycle. However, there is sufficient energy available to keep the voltage across the control circuitry 22 at an acceptable level. This is necessary to ensure that over-voltage trip circuitry (when provided in an output circuit) remains latched, and that the power supply controller is supplied with sufficient voltage to prevent any spurious operation when the stand-by signal is removed. Although a small amount of power is imparted into the DC output 26,28,30, output bleeder resistors may be provided to ensure that the output voltages remain very low, even with 0 system loading. However, if these low voltages are unacceptable, the DC outputs 26,28,30, could easily be crow-barred using an output disable signal.

When the DC outputs 26,28,30 are in the disabled condition, there is an imbalance in the loadings of reservoir capacitors C1,C2 caused by the appreciable firing voltage of the diac DC1 compared to the AC input voltage across the supply lines 10,12. When the SMPS is set for 220V AC power supply systems, i.e. a European system, with jumper J1 removed, this results in a voltage difference between reservoir capacitors C1 and C2. This voltage difference must not be too great otherwise the voltage rating of capacitor C2 may be exceeded. Hence there is a limit on how much power can be delivered to the control circuitry 22 during the disabling mode of operation.

It will be noted that capacitor C3, resistors R3,R4,R6, diode D1 and diac DC1 perform solely a start-up function, whereas resistors R2,R5, transistor Q1, transformer T1, diode D2 and capacitor C4 perform not only a start-up function but also have at least one other function as well.

All other components shown in Figure 1 perform no start-up function at all.

The total component list for Figure 1 is as given below:

DC1

Q1

R1

R2

R3

R4

R5

R6

C1

C2

C3

C4

C5

C6

C7

D1

D2

D3

D4

D5

T1

plus control circuitry, filtering and bridge B1.

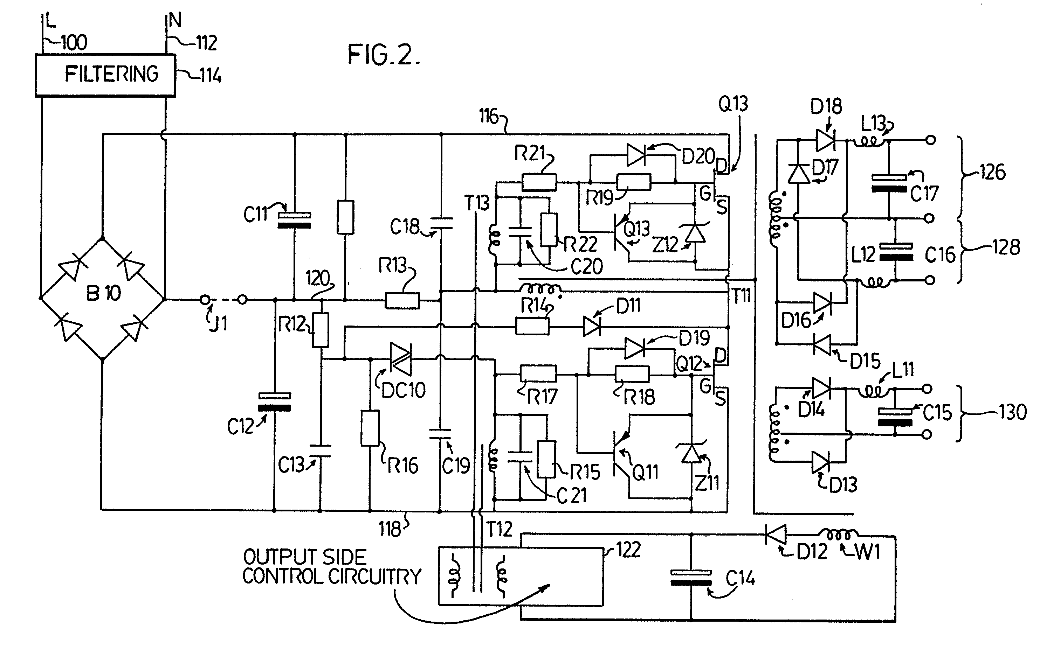

Figure 2 shows a start-up circuit in accordance with the invention with a FET (Field Effect Transistor) half bridge push/pull SMPS. So far as the start-up circuit is concerned, the principal difference between the circuit of Figure 2 and that of Figure 1 is that in the Figure 2 circuit one side of diac DC10 is connected directly to the secondary drive of transformer T2. A current limiting resistor corresponding to resistor R3 of Figure 1 is not required. Other details of the circuit of Figure 2 will be readily apparent to a person skilled in the art.

The start-up circuit of Figure 2 operates in a similar manner to the start-up circuit of the bi-polar fly-back system described with reference to Figure 1. However, when diac DC10 fires, it generates an appreciable voltage (about 8V) across the secondary of the drive transformer T12 which is sufficient to turn FET Q12 fully on via the drive circuitry 122 before the diac pulse disappears. After the SMPS powers up, diac DC10 is disabled during normal operation, as in the previous embodiment. It is necessary that the peak magnitude of the secondary voltage of drive transformer T12 is not greater than the firing voltage of diac DC10, otherwise diac DC10 may fire in a reverse direction during normal SMPS operation.

During output overload, diac DC10 remains disabled as the duty cycle narrows for the same reasons as explained in connection with the previous embodiment. When the duty cycle becomes very narrow, or if FET's Q12 and Q13 fail to turn on properly at all, diac DC10 may fire. As the voltage of diac DC10 comes close to firing, a negative going pulse on drive transformer T12 (just after FET Q12 has been turned on and then off by the control circuitry 122) will cause diac DC10 to fire. Since diac DC10 is on for less than half the period of the SMPS switching cycle, diac DC10 will not fire when the upper FET Q13 is conducting. Therefore, if an output is short circuited, firing of diac DC10 does not lead to FET destruction nor does it generate appreciable voltages across the un-shorted outputs because of the output inductors and bleeder resistors.

During brown out conditions the start up circuit of Figure 2 behaves in a similar manner to that of Figure 1. In other words, the start-up circuit exhibits snap action and possesses inherent hysteresis to provide brown out safety. During output disable, that is to say during over voltage trip or during stand-by, the basic operation of the start-up circuit is, with one major difference, similar to that of Figure 1. With the start-up circuit of Figure 2, there are now two imbalances affecting the loading of reservoir capacitors C11, C12. One imbalance is similar to that already mentioned in connection with Figure 1, i.e. that caused by the appreciable diac firing voltage compared to the input voltage which, when the SMPS is set for 220V, i.e. with the jumper J1 removed, results in a voltage difference between the two capacitors. The other imbalance is caused by primary current flowing from the junction of the half-bridge capacitors C18,C19, and therefore from the junction of the reservoir capacitors C11,C12 via resistor R13. Since this current is produced only by diac DC10 turning on lower FET switch Q12 and hence is uni-directional during output disable, such current produces a loading imbalance on the half-bridge capacitors C18,C19 and the reservoir capacitors C11,C12.

The two imbalances cancel each other out to some extent, but the second imbalance tends to predominate resulting in the upper reservoir capacitor C11, having the larger voltage when jumper J1 is not present. This is the opposite of the Figure 1 circuit. Control circuitry dissipation during output disable should therefore be limited in order to keep the voltage of upper reservoir capacitor C11 within the ratings of the capacitor, and also to keep the voltage to control circuitry 122 sufficiently high.

With the circuit of Figure 2, it will be noted that the capacitor C13, resistors R14,R16, diode D11 and diac DC10 perform solely a start-up function, whereas resistor R12 transistor Q12, transformer T11, diode D12 and capacitor C14 perform not only a start-up function but also at least one other function as well.

The start-up circuit of Figure 2 can, with appropriate changes, be used in connection with a full bridge power FET SMPS. For example, two transistors would be turned on when the diac fires, with a tightly coupled drive transformer having two secondaries for this purpose instead of one.

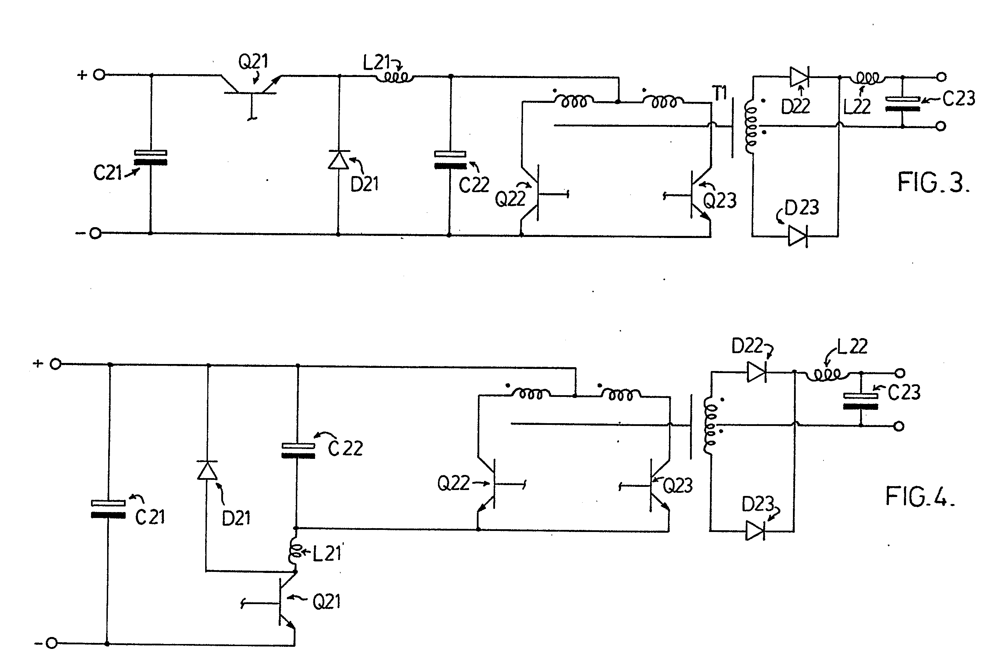

A start-up circuit of the present invention can also be applied to conventional regulator-converter arrangement, for example the kind as shown in Figure 3, where a buck regulator has a swinging emitter feeding a fixed duty cycle converter. The emitter of regulator transistor Q1 switches between lead and return of a DC input. Figure 4 shows how the input of Figure 3 can be rearranged to enable the invention to be readily used therewith, namely by rearranging various components such that the emitter of switching transistor Q21 is taken to the input side return. The start-up circuit of the present invention has not been shown in full but the feasibility of using it will be apparent.

Commercially obtainable diacs usually have a firing voltage of about 32V and thus are suitable for use in a start-up circuit of the present invention when the input voltage is of a high value, for example, AC mains voltages of 110V or 220V. For a DC to DC converter, with a normal input voltage of for example 12V or 24V, a four layer diode with a firing voltage of 10V or lower can be used instead of a diac in the start-up circuit in accordance with the present invention. For example, a three terminal four layer diode may be used with the firing voltage being programmed with resistors, as will be readily apparent to a person skilled in the art. A unijunction transistor may also be used.

With a DC input, the bridge B1, reservoir capacitors C1, C2, resistors R1,R2, and voltage select link or jumper J1 at Figure 1 would be omitted and replaced for example, by a reverse polarity protection diode and/or an input noise rejection capacitor. Similar comments apply to Figure 2.

It will be thus readily apparent to a person skilled in the art that the disabled diode technique in accordance with the present invention can be used with most types of SMPS incorporating either bi-polar or FET technology in which at least one power switching transistor has its emitter or source taken to the input side return or lead and in which the drive circuitry does not divert more than a fraction of the diac firing current.

To utilize the present invention, only a few additional components are required since some of the components of the start-up circuit may already be present for other functions. Usually, all the components necessary for the start-up circuit will be small in size, easy to mount on the print circuit board, light in weight and of conventional type and value. No high-potential components are required and the components may all be low voltage components, except for the negative peak rectifying diode which should have a peak inverse voltage rating of up to a few hundred volts, depending on the type of converter and the maximum input voltage. This diode must also be reasonably fast.

Although the start-up circuit is capable of providing high transient power, which is needed to rapidly charge the capacitor across the control circuitry, its power dissipation is extremely small during all modes of SMPS operation. The circuit will function equally well with a DC input or an AC input over a wide frequency and voltage range. The lower voltage limitation is set by the diac firing level, usually 32V for present day conventional diacs.

There is no input side-only limitation since the start-up winding on the power transformer that feeds the control circuitry can be referred to either side of the transformer. If the SMPS employs control circuitry on both the input and output sides, and both control circuits need one or more voltage rails, this can easily be achieved by using two or more start-up windings. If there is only one voltage rail for the control circuitry and it is on the output side, a start-up winding may be omitted and an output secondary winding may be used for this purpose. An output secondary winding which doubles as the start-up winding must, of course, be of the correct voltage, although the control circuitry can usually be designed to function at a voltage in a relatively wide range.

Another advantage of the invention is that the start-up circuit will recycle if the SMPS fails to power up on the first diac pulse with the diac firing repeatedly until correct SMPS operation is achieved. Also, once the start-up circuit has achieved start-up, it is automatically disabled during normal operation of the SMPS. Hence, there are no interaction or beating effects caused by the different oscillation frequencies of the start-up circuit and the SMPS switching circuitry during normal SMPS operation. Further, the start-up circuit, once disabled, does not add to the electrical or acoustic noise generated by the SMPS.

The input voltage at which the diac can fire and hence power up the SMPS can be set at any level above that determined by the diac firing voltage. Such input voltage can be simply achieved by correct choice of the resistor value across the start-up capacitor. The magnitude of the control circuitry voltage is dependent, among other things,. on how well the switching transistor is saturated when turned on by the control circuitry. Thus, there is an inherent positive feed-back action when the input voltage is just above the level necessary to turn the SMPS on, giving a snap-on action. When the input voltage falls to a low enough level there is a similar snap-off action. Hence, safe SMPS operation during power-up, power-down and brown out conditions is assured, no matter how slow the input voltage transitions may be.

As previously described, the input voltage at which the SMPS snaps on is appreciably greater than the level at which it snaps off. Such hysteresis ensures that the SMPS does not go through a potentially destructive on/off series of cycles when power is supplied because of finite line impedance. This is especially useful, for example, if an auto-transformer is inserted beween the input and the SMPS for testing purposes. Even at power levels of one kW it has been found to be safe to increase the input voltage slowly with an autotransformer until the SMPS snaps on. No on/off oscillation was observed, even though there was a substantial input voltage drop when input current was drawn.

Other embodiments and examples of the invention will be readily apparent by a person skilled in the art, the scope of the invention being defined in the appended claims.

0190493

1.        An AC to DC or DC to DC switched mode power supply
system having an input, a power transformer with a primary
connected to the input and with at least one output, switching means connected in series with a primary and the input, a
control circuit operable to control switching of the switching means after start-up and a start-up circuit comprising
voltage-actuated means which conducts only when voltage applied thereto exceeds a predetermined value less than maximum
input voltage, said voltage-actuated means being connected to
receive start-up input voltage and being connected to the
switching means to cause the switching means to switch on
when the voltage-actuated means is caused to conduct by increase of input voltage on start-up, and means for disabling
the voltage-actuated means during normal operation of the
power supply by preventing a voltage applied to the voltage-
actuated means from reaching a predetermined value.

2.        A power supply system according to claim 1 wherein
the start-up circuit also comprises resistor-capacitor means
connected to the voltage-actuated means to cause start-up
voltage applied to the voltage-actuated means to increase at
a rate slower than the rate of start-up voltage increase at
the input.

3.        A power supply system according to claim 1 wherein
the disabling means comprises capacitor means connected to
the voltage-actuated means, and resistor means connected between the capacitor means and the power transformer primary
side of the switching means to maintain said capacitor means
sufficiently discharged during normal operation of the power supply to prevent the voltage applied to the voltage-actuated means from exceeding the predetermined value.

4.      A power supply system according to claim 1 wherein the start-up circuit also comprises resistor-capacitor means connected to the voltage-actuated means to cause start-up voltage applied to the voltage-actuated means to increase at a rate slower than the rate of increase of start-up voltage at the input, and the disabling means comprises a resistor means connected between the resistor-capacitor means and the power transformer primary side of the switching means to maintain the capacitor component of said resistor-capacitor means sufficiently discharged during normal operation of the power supply to prevent the voltage applied to the voltage-actuated means from exceeding the predetermined value.

5.      A power supply system according to claim 1 wherein the voltage-actuated means comprises a triac.

6.      A power supply system according to claim 1 wherein the voltage-actuated means comprises a four-layer diode.

7.      A power supply system according to claim 1 wherein the voltage-actuated means comprises a uni-junction transistor.

8.      A power supply system according to claim 1 wherein the switching means comprises at least one transistor.

9.      A power supply system according to claim 1 wherein the power supply comprises a fly-back bi-polar arrangement.

10.      A power supply system according to claim 1 wherein the power supply comprises half- or full-bridge power FET arrangement.

FIG.1.

FIG.2.

FIG.3.

FIG.4.

3/3

0190493